# EUROPÄISCHE PATENTSCHRIFT

(11) **EP 0 531 491 B1**
(45) Veröffentlichungstag und Bekanntmachung des Hinweises auf die Patenterteilung: **24.05.1995**
(21) Anmeldenummer: 92907070.4
(22) Anmeldetag: 26.03.1992
(51) Int. Cl.: D21F 3/04, D21F 3/02, D21F 7/00

(54) **WALZENPRESSE**
ROLL PRESS
PRESSE A ROULEAUX

(30) Priorität: 28.03.1991 DE 4110205
(43) Veröffentlichungstag der Anmeldung: 17.03.1993
(73) Patentinhaber: J.M. Voith GmbH, D-89522 Heidenheim (DE)
(72) Erfinder: SCHIEL, Christian, D-7920 Heidenheim (DE)
(74) Vertreter: Weitzel, Wolfgang, Dr.-Ing.
(86) Internationale Anmeldenummer: EP9200672
(87) Internationale Veröffentlichungsnummer: WO9217641

(56) Entgegenhaltungen:
- EP-A- 0 328 844
- DE-U- 8 232 424
- NL-A- 6 814 378

## Beschreibung

Die Erfindung betrifft eine Walzenpresse mit einer ersten Preßwalze und mit einer zweiten Preßwalze, deren Hauptachsen in einer Preßebene liegen und die miteinander einen Preßspalt bilden. Die Erfindung geht aus von einer Walzenpresse mit den im Oberbegriff des Anspruches 1 angegebenen Merkmalen, die aus der US-PS 3,921,514 bekannt sind.

In einer Ausführungsform der bekannten Walzenpresse befindet sich die erste Preßwalze in der unteren und die zweite Preßwalze in der oberen Position. Somit stehen die Lagerböcke der ersten Preßwalze auf einem Gestell, Fundament oder dgl.. Aus der US '514 ist aber auch die umgekehrte Anordnung bekannt, bei der die Lagerböcke der ersten (in diesem Fall obenliegenden) Preßwalze an der Unterseite eines Gestells aufgehängt sind. Die Erfindung betrifft beide Anordnungen. Des weiteren ist die bekannte Walzenpresse derart ausgebildet, daß die Lagerböcke, in denen die zweite Preßwalze ruht, an den Lagerböcken der ersten Preßwalze mittels Zugstäben starr befestigt sind. Die genannten Zugstäbe sind als Schrauben ausgebildet und müssen im belasteten Zustand der Walzenpresse hohe Zugkräft übertragen, die aus der im Preßspalt herrschenden Preßkraft resultieren. Man muß hierbei berücksichtigen, daß derartige Walzenpressen bevorzugt in Papierherstellungsmaschinen Anwendung finden, deren Breite im Extremfall bis zu 10 m betragen kann. Außerdem werden manche Walzenpressen (z.B. gemäß US-PS 4,503,765); als Schuhpressen ausgebildet, worin die im Preßspalt herrschende Linienkraft die Größenordnung von 1000 kN/m erreichen kann.

Zwar werden beim Gegenstan der US '514 die Preßkräfte vom Maschinengestell ferngehalten, so daß dieses höchstens das Eigengewicht der Walzenpresse tragen muß. Aber es besteht das Problem, daß die genannten Schraubverbindungen außerordentlich voluminös und teuer werden. Außerdem müssen die Schrauben unter einer beträchtlichen Vorspannung stehen, die laut US '514 höher sein muß als die maximale Preßkraft. Mit anderen Worten: Die Schrauben sind schon im unbelasteten Zustand der Walzenpresse stark gespannt. Deshalb ist das Montieren der Schrauben nur mit enormen Aufwand durchführbar.

Bei Verwendung der bekannten Walzenpresse in der Pressenpartie einer Papierherstellungsmaschine kommt erschwerend hinzu, daß wenigstens ein endloses Filzband durch den Preßspalt laufen muß und daß ein derartiges Filzband in regelmäßigen Zeitabständen gegen ein neues Filzband ausgewechselt werden muß. Zu diesem Zweck ist es jedesmal erforderlich, die genannten Schraubverbindungen zu lösen und nach dem Einziehen des neuen endlosen Filzbandes wieder vorzuspannen. Dies sind bei den erwähnten voluminösen Schraubverbindungen und wegen der notwendigen hohen Vorspannung der Schrauben sehr umständliche und zeitraubende Arbeitsvorgänge.

Ein weiteres Problem bei derartigen Walzenpressen besteht darin, daß bei jeder Preßwalze wenigstens einer der beiden Lagerzapfen - wegen der mitunter vorkommenden thermisch bedingten Längenänderungen des drehbaren Walzenmantels oder des stationären Trägers - unter der vollen Betriebslast in axialer Richtung verschiebbar sein muß. Im Falle eines drehbaren Lagerzapfen muß also beispielsweise der Wälzlager-Außenring im Lagergehäuse verschiebbar sein. Oder im Falle eines stationären Lagerzapfens muß z.B. vorgesehen werden, daß dieser Lagerzapfen in einer Hülse (oder Muffe) axial verschiebbar ist. In beiden Fällen müssen Gleitflächen vorgesehen werden, die zur Übertragung der immensen Preßkräfte geeignet sind und gleichzeitig die nötige Axialverschiebung zulassen.

Der Erfindung liegt die Aufgabe zugrunde, die bekannte Walzenpresse dahingehend weiterzuentwickeln, daß zumindest an einem der beiden Enden der Walzenpresse ein rasches Lösen und Wiederherstellen der Koppelung zwischen den Lagerböcken der beiden Preßwalzen möglich ist und daß gleichzeitig zumindest in der zweiten Preßwalze die bisher erforderliche Gleitfläche für das axiale Verschieben des Lagerzapfens entfallen kann.

Der Erfinder hat erkannt, daß beide Probleme durch die Anwendung der kennzeichnenden Merkmale des Anspruches 1 gelöst werden können. Gemäß diesem Lösungsprinzip vermeidet man nunmehr - zumindest an dem einen Ende der Walzenpresse, über das beim Filzwechsel ein neues endloses Filzband eingeführt wird - die bisherige starre Koppelung des Lagerbockes der zweiten Preßwalze mit dem Lagerbock der ersten Preßwalze. Denn gemäß der Erfindung sind die Zugstäbe nicht mehr als vorzuspannende Schraubverbindungen ausgebildet; vielmehr sind sie im unbelasteten Zustand der Walzenpresse spannungsarm, d.h. zumindest weitgehend spannungsfrei, so daß sie leicht lösbar und ebenso leicht wieder montierbar sind, z.B. bei dem schon erwähnten Auswechseln des Filzbandes. Trotzdem können die Zugstäbe problemlos so dimensioniert werden, daß sie die enormen Zugkräfte vom einem zum anderen Lagerbock übertragen können.

Der Begriff "spannungsarm" besagt, daß die Zugstäbe, wenn die Walzenpresse unbelastet ist, beispielsweise nur durch das Eigengewicht einer der Preßwalzen oder beispielsweise mittels einer Spreizeinrichtung geringfügig vorgespannt sind. Aus dieser Tatsache resultiert folgendes: Der belastete Zustand der Walzenpresse ist stets dadurch gekennzeichnet, daß zwischen den beiden Lagerböcken, welche durch die Zugstäbe verbunden sind, ein Abstand (oder "Spiel") vorhanden ist. Wie weiter unter erläutert wird, gibt es verschiedene konstruktive Ausführungen: Bei der einen stellt sich der genannte Abstand erst durch das Belasten der Walzenpresse ein; bei anderen ist der Abstand dauernd vorhanden, jedoch vergrößert er sich unter der Belastung. In jedem Fall ermöglicht es dieser Abstand - im Zusammenwirken mit dem weiteren erfindungsgemäßen Merkmal, wonach die Zugstäbe beweglich sind - daß die beiden Lagerböcke relativ zueinander in der Preßebene beweglich sind, insbesondere in der Richtung der Hauptachsen. Daraus resultiert, daß zumindest in der zweiten Preßwalze der Lagerbock starr an den Lagerzapfen gekoppelt werden kann und daß dennoch eine (z.B. thermisch verursachte) Längsdehnung möglich ist, außerdem auch eine Neigung des Lagerzapfens, welche durch eine Durchbiegung der Preßwalze verursacht sein kann. Die schon erwähnte Beweglichkeit der Zugstäbe ist so zu verstehen, daß die Zugstäbe im wesentlichen in der Richtung der Hauptachsen der Preßwalzen, also wenigstens angenähert parallel zur Preßebene beweglich sind. Die Beweglichkeit der Zugstäbe könnte dadurch gewährleistet werden, daß sie mit Hilfe von Schwenklagern an die Lagerböcke gekoppelt sind. Gemäß der Erfindung werden jedoch biegeweiche Zugstäbe bevorzugt, wie weiter unten erläutert wird.

Ein wichtiger weiterer Aspekt der Erfindung befaßt sich mit dem Teilproblem, daß in vielen Fällen eine der beiden Preßwalzen als Langspaltpreßwalze ausgebildet werden soll. Es kann auch vorkommen, daß in der Position beispielsweise der zweiten Preßwalze zeitweise eine normale Preßwalze mit metallischen Walzenmantel und zeitweise eine Langspalt-Preßwalze mit flexiblem Preßmantel angeordnet werden soll. Deshalb sind gemäß einem weiteren Gedanken der Erfindung die Zugstäbe derart angeordnet, daß der Abstand zwischen den Außenseiten der Zugstäbe nicht oder nur höchstens ganz geringfügig größer ist als der Durchmesser der größeren der beiden Preßwalzen. Durch die Anwendung dieses Merkmals gelingt es, die Außenabmessungen der Lagerböcke, in Achsrichtung gesehen, so klein zu halten, daß - nach dem Entfernen der Zugstäbe - ein Auswechseln des flexiblen schlauchförmigen Walzenmantels einer Langspalt-Preßwalze mögich ist, ohne den betreffenden Lagerbock zu entfernen. Es ist wichtig, dieses Merkmal auch dann anzuwenden, wenn die Walzenpresse zunächst zwei normale Preßwalzen mit metallischen Walzenmänteln aufweist. So kann sie mit relativ geringem Aufwand in eine Langspaltpresse umgebaut werden.

Aus der US-PS 4,272,317 ist schon eine Langspalt-Preßvorrichtung anderer Art bekannt, worin ein Träger für einen Preßschuh und für die Leitwalzen eines umlaufenden Preßbandes mit Hilfe von Zugstäben an oben liegenden Gestellteilen aufgehängt ist. An diesen Gestellteilen hängen auch die Lagerböcke für eine Preßwalze. Zwar sind auch die Zugstäbe dieser bekannten Preßvorrichtung im unbelasteten Zustand der Preßvorrichtung nur durch das Eigengewicht des Trägers (einschließlich der daran befestigten Elemente) belastet; auch sind diese Zugstäbe in der Richtung der Hauptachsen beweglich. Da sie jedoch, in Achsrichtung gesehen, außerhalb der Kontur des Lagerbockes der Preßwalze liegen, ist es nicht möglich, diese bekannte Anordnung bei einer Zwei-Walzenpresse anzuwenden, bei der ein Preßmantel in axialer Richtung ausgewechselt werden muß. Es ist also ein wesentliches Merkmal der Erfindung, daß die Zugstäbe in möglichst geringer Entfernung von der Preßebene angeordnet und unmittelbar an die Lagerböcke gekoppelt sind.

Gemäß der Erfindung haben die Lagerböcke Arme, die zum Ankoppeln der Zugstäbe dienen und die - zumindest beim Lagerbock der Langspalt-Preßwalze - vollkommen oder mindestens zum größten Teil innerhalb der Kontur des Walzenmantels liegen, wenn man in Achsrichtung auf dem Lagerbock blickt (Anspruch 2).

Die zuvor beschriebenen Merkmale können im Prinzip realisiert werden mit schwenkbaren Zugstäben, die also gelenkig mit den Lagerböcken verbunden sind, wobei die Gelenkachsen senkrecht zur Preßebene liegen. Eine derartige Konstruktion erfordert jedoch viel Platz in Achsrichtung, wenn die Zugstäbe für das Auswechseln des Filzbandes oder Walzenmantels in eine ungefähr achsparalle Position gebracht werden müssen. Gemäß einen weiteren wichtigen Gedanken der Erfindung ist deshalb vorgesehen, daß jeder der Zugstäbe in der Richtung der Preßwalzen-Hauptachsen biegeweich ist (Anspruch 3). Hierbei ist es möglich, an einem Ende jedes Zugstabes ein Schwenklager vorzusehen, dessen Achse zur Preßebene parallel angeordnet ist oder mit der Preßebene einen spitzen Winkel bildet.

Hierdurch kann der Zugstab seitlich ausgeschwenkt werden (in eine zur Preßebene senkrechte oder schräge Position).

Abweichend von diesen denkbaren Ausführungsformen ist jedoch gemäß der Erfindung vorgesehen, daß jeder der biegeweichen Zugstäbe die Form eines I hat; er umfaßt also an seinen beiden Enden je einen starren "Kopf", vorzugsweise einen Hammerkopf. Im belasteten Zustand der Walzenpresse sitzen diese Köpfe unbeweglich in den Lagerböcken, so daß die relative Beweglichkeit der beiden Lagerböcke zueinander allein aufgrund der Biegeweichheit der Zugstäbe möglich ist. Am einfachsten realisiert man diesen Erfindungsgedanken dadurch, daß der einzelne Zugstab nach Art einer Blattfeder ausgebildet ist, deren "Blattebene" im wesentlichen senkrecht zur Preßebene liegt. Hierdurch sorgt man dafür, daß der Zugstab nahezu ausschließlich in einer zur Preßebene parallelen Ebene biegeweich ist; d.h. die Biegsamkeit des Zugstabes ist parallel zur Preßebene um ein Vielfaches höher als senkrecht zur Preßebene.

Zugstäbe der beschriebenen Art können auch in Preßvorrichtungen anderer Art oder z.B. in Walzwerken, Kalandern oder dergleichen angewandt werden. Deshalb wird mit den Ansprüchen 20 ff. auch Schutz für den Zugstab allein begehrt.

Das Ein- und Ausbauen der Zugstäbe erfolgt vorzugsweise durch eine geradlinige Bewegung der Zugstäbe in einer zur Preßebene senkrechten Richtung. Die Zugstäbe sind also von der Seite her in Ausnehmungen der Lagerböcke einsetzbar. Der einzelne Zugstab kann zu diesem Zweck eine Querbohrung aufweisen, in die sich ein am Maschinengestell abgestützter Bolzen erstreckt. Dieses ist insbesondere dann vorteilhaft, wenn die Preßebene senkrecht angeordnet ist und der Bolzen sich somit in einer horizontalen Richtung erstreckt.

Die Zugstäbe müssen einerseits eine gewisse Mindestlänge aufweisen, um ausreichend biegweich zu sein. Andererseits sollen sie nicht zu lang sein, so daß sie möglichst wenig Platz beanspruchen. Eine besonders günstige Kompromißlösung ist den Ansprüchen 8 und 9 angegeben.

Es versteht sich, daß die Breite des Zugstäbe, senkrecht zur Preßebene gemessen, von der Höhe der zu übertragenden Zugkraft und somit hauptsächlich von der Maschinenbreite, also von der Länge des Preßspaltes abhängt. Damit die Zugstäbe auch bei einer sehr großen Zugstab-Breite möglichst ohne die Anwendung eines Hebezeuges oder einer Hubeinrichtung aus- und eingebaut werden können, kann es vorteilhaft sein, den einzelnen Zugstab über seine Breite in mehrere Teil-Zugstäbe zu unterteilen. Somit ist der Begriff "Zugstab" so zu verstehen, daß entweder ein einzelner Zugstab oder eine Zugstab-Gruppe gemeint ist.

Die Erfindung unterscheidet sich wesentlich von der schon genannten bekannten Walzenpresse, die in US 4,503,765 beschrieben ist. Dort ist ein rahmenförmiges Gestell vorgesehen, wobei der eine Lagerbock auf einem unteren Gestellteil und der andere Lagerbock an einem oberen Gestellteil befestigt ist. Da eine unmittelbare Koppelung zwischen Stützelement und den Lagerböcken fehlt, ist es hier erforderlich, daß zwischen den beiden Gestellteilen lösbare Verbindungselemente vorgesehen werden, welche die aus der Preßkraft resultierenden Zugkräfte übertragen. Hier ist also das eingangs beschriebene Problem nicht gelöst sondern nur ins Gestell verlagert, wobei auch das Gestell selbst für die hohen Zugkräfte dimensioniert werden muß. Beim Gegenstand der Erfindung wird das bekannte Merkmal beibehalten, daß die genannten Zugkräfte vom Maschinengestell ferngehalten werden. Das Maschinengestell kann also relativ leicht sein, weil es im wesentlichen nur für das Eigengewicht einer der beiden Preßwalzen oder von beiden Preßwalzen ausgelegt werden muß.

Das im Kennzeichen des Anspruches 1 beschriebene Lösungsprinzip kann in unterschiedlicher Weise realisiert werden. Eine erste Gruppe von Ausführungsbeispielen ist dadurch gekennzeichnet, daß sich die erste, am Gestell abgestützte Preßwalze in der unteren Position befindet und auf dem Gestell ruht und daß sich die zweite Preßwalze in der oberen Position befindet. In diesem Fall ruht das Stützelement der zweiten Preßwalze - zumindest im unbelasteten Zustand der Walzenpresse - auf dem Lagerbock der ersten Preßwalze. Da nun die Zugstäbe ohne nennenswerte Vorspannung montiert werden, stellt sich im belasteten Zustand der Walzenpresse zwischen den Lagerböcke ein Abstand ein. Hierdurch wird im belasteten Zustand der Walzenpresse die axiale Verschiebbarkeit und Neigbarkeit des einen Lagerbocks relativ zum anderen Lagerbock sichergestellt.
Bei einer anderen Gruppe von Ausführungsbeispielen der Erfin- dung ist im unbelasteten Zustand der Walzenpresse folgendes vorgesehen: Die beiden Preßwalzen sind voneinander unabhängig - ähnlich wie beim Gegenstand der US 4,503,765 - im Maschinenge- stell abgestützt.
Vorzugsweise steht also der Lagerbock der einen Preßwalze auf einem unteren Gestellteil und der Lagerbock der anderen Preßwalze hängt an einem oberen Gestellteil, so daß zwischen dem Stützelement und dem Lagerbock dauernd ein Abstand vorhanden ist. Abweichend von der US '765 ist nun aber vorgesehen, daß im belasteten Zustand der Walzenpresse mittels der Zugstäbe eine Kraftübertragung unmittelbar vom einen zum anderen Lagerbock erfolgt. Hierdurch wird wiederum erreicht, daß (wie schon erwähnt) die Zugkräfte vom Gestell ferngehalten werden und daß gleichzeitig die Lagerböcke relativ zueinander beweglich sind.

Weitere Vorteile und Ausgestaltungen der Erfindung werden nachfolgend anhand der zeichnerisch dargestellten Ausführungsbeispiele erläutert.

Die Fig. 1 ist eine Seitenansicht auf eine Walzenpresse in Richtung des Pfeiles I der Fig. 1A.

Der Fig. 1A ist ein Längsschnitt entlang der Linie A-A der Fig. 1.

Die Fig. 1B ist eine Teilansicht von oben in Richtung des Pfeiles B der Fig. 1.

Die Fig. 2 zeigt einen einzelnen blattfederartigen Zugstab (gegenüber Fig. 1A etwa 3-fach vergrößert).

Die Fig. 3 ist eine Seitenansicht in Richtung des Pfeiles III der Fig. 2.

Die Fig. 4 zeigt einen Zugstab ähnlich demjenigen der Fig. 2, in verformtem Zustand.

Die Fig. 5 ist eine Seitenansicht auf ein anderes Ausführungsbeispiel der Erfindung.

Die Fig. 6 ist eine Ansicht in Richtung des Pfeiles VI der Fig. 5.

Die Fig. 7 ist die Seitenansicht eines weiteren von Fig. 1 abweichenden Ausführungsbeispieles.

Die Fig. 8 bis 10 zeigen verschiedene Zugstab-Formen in einer vergrößerten Teil-Ansicht in Richtung des Pfeiles X der Fig. 7.

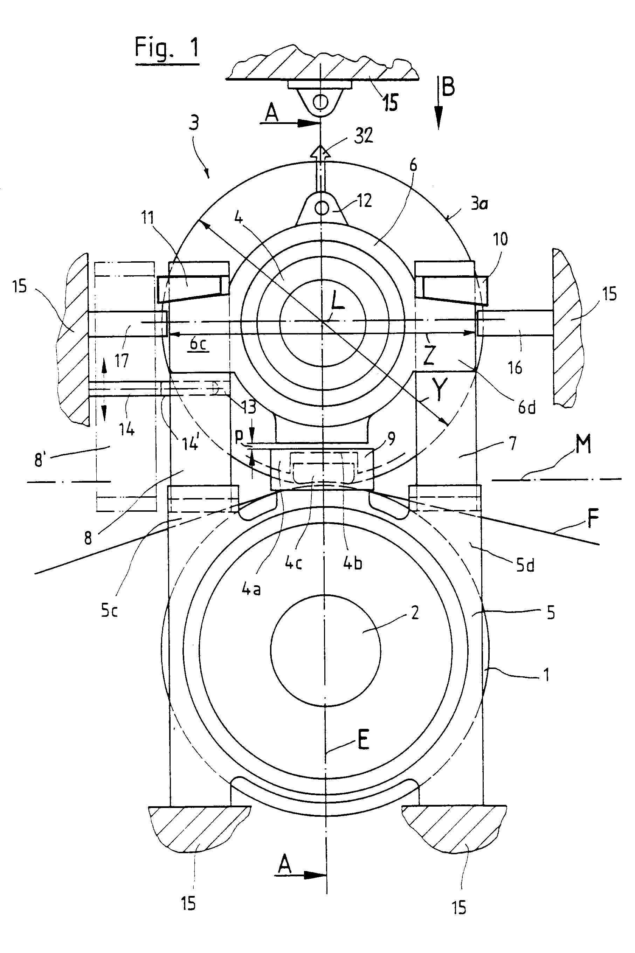

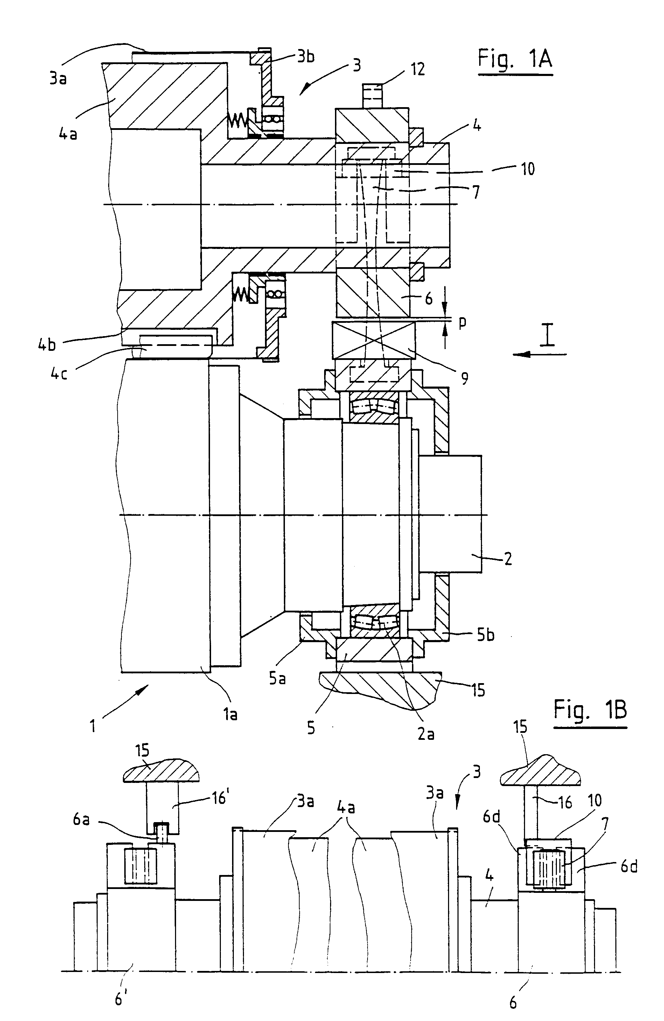

Die in den Figuren 1, 1A und 1B dargestellte Walzenpresse hat eine untenliegende erste Preßwalze 1 und eine obenliegende zweite Preßwalze 3. Die Hauptachsen dieser Preßwalzen (dies sind beim dargestellten Beispiel die Drehachsen) liegen in einer Preßebene E. Die erste Preßwalze 1 hat einen drehbaren Walzenmantel 1a und einen daran befestigten Lagerzapfen 2, der mittels eines Wälzlagers 2a (vorzugsweise Pendelrollenlager) in einem Lagerbock 5 (mit Deckeln 5a und 5b) ruht. Der Lagerbock 5 steht auf einem rahmenförmigen Maschinengestell 15, von dem in Fig. 1 einige Teilstücke angedeutet sind. Das Wälzlager 2a kann im Lagerbock 5 axial verschiebbar sein, um eine (z.B. thermisch bedingte) Längenänderung der Preßwalze 1 zu ermöglichen. Zu diesem Zweck ist es aber auch möglich, den Lagerbock 5 axial beweglich an das Maschinengestell 15 zu koppeln (z.B. gemäß der oben schon erwähnten US '317).

Die obere, zweite Preßwalze 3 ist eine sogenannte Langspalt-Preßwalze. Ihr drehbarer Walzenmantel 3a ist ein schlauchförmiger, flexibler Preßmantel, der an zwei drehbaren Manteltragscheiben 3b befestigt ist. Jede Manteltragscheibe ruht auf dem stationären Lagerzapfen 4 eines stationären Tragkörpers 4a, der sich durch das Innere des Walzenmantels 3a erstreckt. Abweichend von der Darstellung kann die Drehachse des Walzenmantels 3a relativ zur Hauptachse des Tragkörpers 4a exzentrisch angeordnet sein. Der Tragkörper 4a hat gegenüber der unteren Preßwalze 1 eine Ausnehmung 4b und darin einen kolbenartigen und hydraulisch betätigbaren Preßschuh 4c. Dieser preßt mit seiner konkaven Gleitfläche den Preßmantel 3a gegen die untere Preßwalze 1, um hierdurch einen (in Laufrichtung) verlängerten Preßspalt zu bilden. Durch diesen läuft eine zu entwässernde Papierbahn zusammen mit wenigstens einem endlosen Filzband F. Die obere Preßwalze 3 ruht (an jedem Walzenende) mit dem Lagerzapfen 4 in einem Lagerbock 6. Zwischen den Lagerböcken 5 und 6 ist ein entfernbares und auf dem Lagerbock 5 liegendes Zwischenstück 9 vorgesehen. Auf diesem ruht der Lagerbock 6 der oberen Preßwalze 3, wenn die Walzenpresse in ihrem unbelasteten Zustand ist, d.h. wenn die Ausnehmung 4b drucklos ist. Dargestellt ist jedoch der belastete Zustand, in dem der Preßschuh 4c auf die untere Preßwalze 1 eine Preßkraft ausübt. Die daraus resultierenden Reaktionskräfte werden mit Hilfe von biegeweichen Zugstäben 7 und 8 vom Lagerbock 6 auf den Lagerbock 5 übertragen.

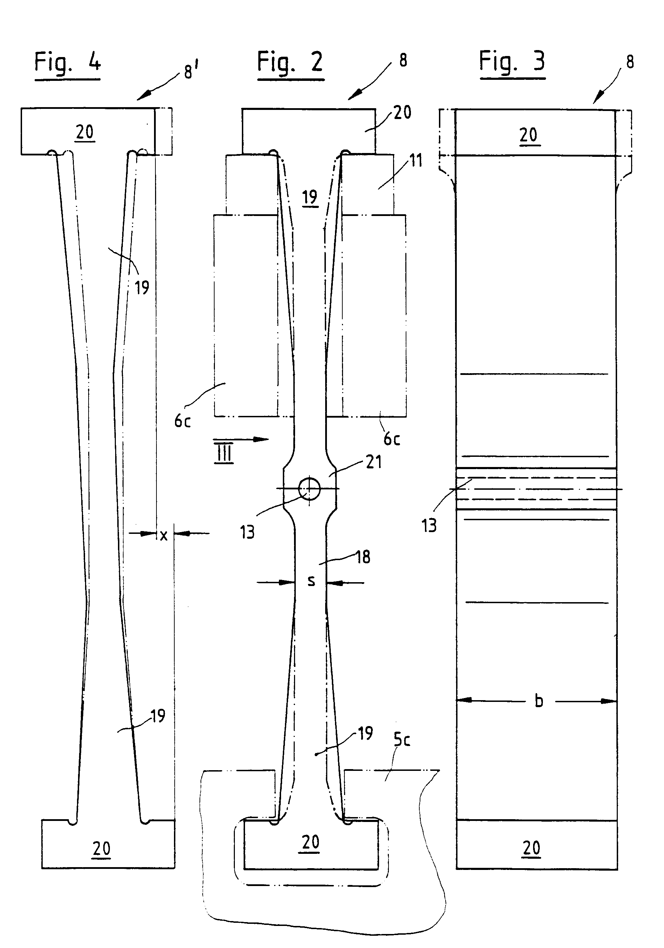

Gemäß Fig. 1 ist beidseits der Preßebene E je ein biegeweicher Zugstab 7, 8 vorgesehen. Diese sind von der Seite her in Ausnehmungen der Lagerböcke 5 und 6 eingesetzt. Jeder der biegeweiche Zugstäbe 7, 8 hat an jedem Ende einen Hammerkopf 20 und ist vorzugsweise nach Art einer Blattfeder ausgebildet, deren sogenannte "Blattebene" senkrecht zur Preßebene E liegt. Hierdurch können sich die Zugstäbe 7, 8 gemäß Fig. 4 verformen, sofern der Tragkörper 4, 4a der zweiten Preßwalze 3 eine (z.B. thermisch bedingte) Längenänderung erfährt und/oder sich unter der Preßkraft durchbiegt. Folglich kann der Lagerbock 6 starr mit dem Lagerzapfen 4 verbunden sein; auf die bisher erforderliche Axial-Gleitfläche zwischen diesen beiden Bauteilen und auf eine kugelige Muffe kann verzichtet werden. Aufgrund einer Durchbiegung des Tragkörpers neigen sich Lagerzapfen 4 und Lagerbock 6 gemeinsam. Deshalb ist es wichtig, daß zu beiden Seiten des Lagerbocks nur je ein einziger Zugstab 7 bzw. 8 angeordnet ist, vorzugsweise in der Mitte des Lagebocks 6' (siehe Fig. 1A).

Außer der Biegeweichheit der Zugstäbe muß aber noch die folgende Voraussetzung erfüllt sein, um die leichte axiale Verschiebbarkeit und/oder Neigbarkeit des Lagerbocks 6 (bei einer Längen-Änderung oder Durchbiegung des Tragkörpers 4, 4a) zu gewährleisten: Im unbelasteten Zustand der Walzenpresse sind die Zugstäbe 7, 8 entweder gar nicht oder nur sehr gering vorgespannt. Dadurch hebt sich der Lagerbock 6 der oberen Preßwalze 3, im belasteten Zustand der Walzenpresse, ein wenig vom Zwischenstück 9 ab. Mit anderen Worten: Es stellt sich zwischen den Lagerböcken 5 und 6 ein Spiel p ein. Die Größe dieses Spiels kann dadurch bestimmt werden, daß an jedem der Zugstäbe 7, 8 zwischen dem Hammerkopf 20 und dem Stützelement 6 ein U-förmiger Keil 10, 11 mehr oder weniger weit eingeschoben wird. Falls erforderlich kann man mit diesen Keilen im unbelasteten Zustand der Walzenpresse die Zugstäbe 7, 8 unter eine leichte Vorspannung setzen.

Das Einziehen eines neuen endlosen Filzbandes F in die Walzenpresse erfolgt selbstverständlich im unbelasteten Zustand, und zwar von dem einen Walzenende her, in Richtung des Pfeiles I der Fig. 1A. Hierbei ruht also zunächst die obere Preßwalze 3 auf dem Zwischenstück 9. Man entfernt an beiden Walzenenden zunächst die Keile 10, 11 und sodann die Zugstäbe 7, 8. Nun wird die obere Preßwalze 3 mittels eines an den Ösen 12 angreifenden Hebezeuges (symbolisch dargestellt durch Pfeil 32) angehoben, das Zwischenstück 9 entfernt und das endlose Filzband F eingezogen. Danach wird das Zwischenstück 9 wieder eingelegt und die Preßwalze 3 darauf abgesetzt, wonach man die Zugstäbe 7, 8 und die Keile 10, 11 wieder montiert. Diese Arbeiten können in relativ kurzer Zeit abgewickelt werden, verglichen mit dem Zeitaufwand bei den bisherigen Konstruktionen. Ähnlich verfahren wird beim Austausch des flexiblen Walzenmantels 3a gegen einen neuen.

Die Figuren 2 und 3 zeigen weitere Einzelheiten eines biegeweichen Zugstabes 8, auch "I-Riegel" genannt. Damit dieser möglichst große Zugkräfte übertragen kann und gleichzeitig den beschriebenen Verlagerungen des Lagerbocks 6 elastisch folgen kann, hat der Zugstab 8 einen über seine Länge optimierten Dicken-Verlauf, nämlich folgendermaßen: Der Zugstab 8 hat einen mittleren Abschnitt 18 von geringer Dicke s, ähnlich einer Blattfeder. Dieser (in der sogenannten "Blattebene" liegende) mittlere Abschnitt 18 ist mit den Hammerköpfen 20 (gemäß Fig. 1A und 2, 4) über keilförmige Zwischenabschnitte 19 verbunden. Anstelle der keilförmigen Zwischenabschnitte können auch gerundete Übergänge vorgesehen werden. Die Breite b des Zugstabes 8 ist (auf die Stirnseite der Preßwalzen 1, 3 gesehen) über seine ganze Länge gleich, siehe Fig. 1 und die in Fig. 3 in vollen Linien dargestellte Form. Abweichend hiervon kann wenigstens einer der Köpfe 20 eine noch größere Breite aufweisen, wie in Fig. 3 mit strichpunktierten Linien dargestellt. In jedem Fall ist die Breite b um ein Vielfaches größer als die Dicke s, so daß extrem hohe Zugkräfte übertragen werden können. Gleichzeitig ist der Zugstab 8 außerordentlich biegeelastisch, wobei die Biegsamkeit des Zugstabes quer zur Blattebene um ein Vielfaches höher ist als in der Blattebene. Somit sind starke Verformungen des Zugstabes in der Richtung der Hauptachsen möglich.

Die Fig. 4 zeigt diese Flexibilität am Beispiel des Zugstabes 8'; bei diesem hat eine Verschiebung des einen Hammerkopfes 20 gegenüber dem anderen um das Maß x stattgefunden. Die mit vollen Linien dargestellte Kontur entspricht ungefähr der Form, die der I-Riegel unter maximaler elastischer Verformung annimmt gegenüber der ursprünglichen Form, die mit Strich-Doppelpunkt-Linien dargestellt ist. Dabei konzentriert sich die Biegung hauptsächlich auf die Übergangszonen vom mittleren Abschnitt 18 zu den keilförmigen Abschnitten 19.

Die Länge des mittleren Abschnittes 18 kann etwa 1/3 (Fig. 2 volle Linien) bis etwa 9/10 (Fig. 2 strichpunktierte Linien) der Gesamtlänge des Zugstabes 8 betragen. In den keilförmigen Zwischenabschnitten 19 vergrößert sich die Dicke des Zugstabes 8 stetig auf das 1,5- bis 3-fache der Dicke s des mittleren Abschnittes 18.

Die Länge der biegeweichen Zugstäbe 7, 8 beträgt mindestens einen halben Meter, bei großen Walzenpressen jedoch vorzugsweise 0,7 bis 1,5 m. In Fig. 1 ist eine zur Preßebene E senkrechte und durch den Preßspalt verlaufende Mittelebene mit M bezeichnet. Am Lagerbock 5 sind Arme 5c und 5d angeformt, die sich in Richtung zur Preßspaltebene M erstrecken. In jedem Arm ist eine nach oben offene T-Nut zur Aufnahme eines der Zugstäbe 7, 8 vorgesehen. Der Lagerbock 6 hat beidseitig, etwa in der Höhe der Mittelebene L (in der die Walzendrehachse liegt), je zwei Arme 6c und 6d und dazwischen je einen Schlitz, wiederum zur Aufnahme je eines der Zugstäbe 7, 8.

Zugstab-Querschnitt und -Werkstoff werden so gewählt, daß die sogenannte Streckgrenze des Zugstabes erreicht wird, wenn die normale maximale Preßkraft der Walzenpresse um ca. 50 bis 100 % infolge einer Störung überschritten wird, wenn z.B. ein Fremdkörper in den Preßspalt gelangt. Mit anderen Worten: Der Zugstab bildet eine Sollbruchstelle, die im Störfall das Entstehen eines größeren Schadens verhindert.

Der Ein- und Ausbau der biegweichen Zugstäbe 7, 8 kann bei kleineren Walzenpressen von Hand vorgenommen werden, bei größeren Walzenpressen dagegen mit Hilfe eines konventionellen Hebezeuges, z.B. Flaschenzuges oder Pneumatikzylinders. Zur weiteren Beschleunigung des Ein- und Ausbaues der Zugstäbe 7, 8 kann jedoch folgendes vorgesehen werden, wie in den Fig. 1 und 3 am Beispiel des Zugstabes 8 dargestellt ist: In der Mitte des mittleren Abschnittes 18 ist eine Verdickung 21 vorgesehen, durch die eine Querbohrung 13 hindurch geht. Diese erstreckt sich in derjenigen Richtung, in welcher der Zugstab 8 in die Ausnehmungen der Lagerböcke 5 und 6 eingesetzt wird. Am Maschinengestell 15 ist ein Bolzen 14 vorgesehen, der sich in die Querbohrung 13 erstreckt. Der Bolzen 14 dient für den Zugstab 8 beim Ein- bzw. Ausfahren als Gleitbahn. nach dem Herausfahren des Zugstabes 8 befindet sich dieser in der mit 8' (Fig. 1) bezeichneten Position. Hier kann der Zugstab 8' um etwa 90° verschwenkt werden, um das Einziehen des neuen endlosen Filzbandes F zu erleichetern.

Es kann zweckmäßig sein, den Bolzen 14 am Gestell 15 verktikal verschiebbar abzustützen, wie mit einem Doppelpfeil symbolisch dargestellt ist. Das äußere Ende 14' des Bolzen 14 kann abgeschraubt werden, um das axiale Eine- und Ausbauen der oberen Preßwalze 3 (oder allein des Preßmantels 3a) zu ermöglichen.

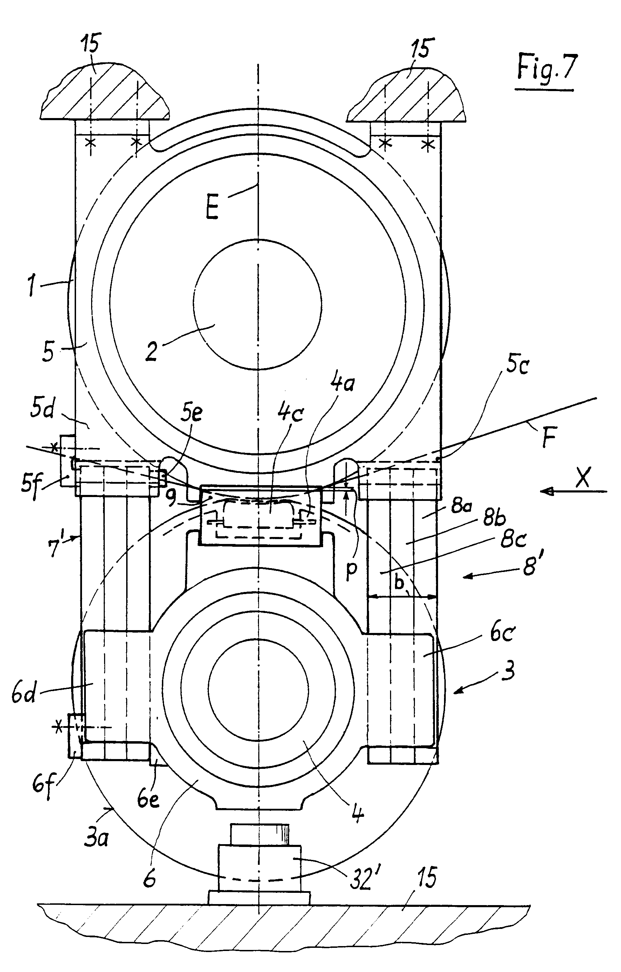

Die Verdickung 21 mit Bohrung 13 und der Bolzen 14 können auch bei großen Zugstäben entfallen (Fig. 4 und 7), und zwar dadurch, daß ein einzelner Zugstab (z.B. 8') unterteilt wird in mehrere Teil-Zugstäbe 8a, 8b und 8c. Diese bilden miteinander eine Zugstab-Gruppe 8'. Die Breite jedes Teil-Zugstabes 8a, 8b, 8c beträgt nur einen Bruchteil (z.B. ein Drittel) der Breite b der gesamten Zugstab-Gruppe 8'. Zur Sicherung der Position der unterteilten Zugstäbe sind im inneren Bereich feste Anschläge 5e, 6e und im äußeren Bereich entfernbare Anschläge 5f, 6f vorgesehen (nur an der einen Zugstabgruppe 7' dargestellt).

In Fig. 1 ist ein mittig angeordnetes Zwischenstück 9 dargestellt. Stattdessen könnten auch Zwischenstücke an den Zugstäben 7 und 8 angeordnet werden; diese könnten z.B. mittels Schrauben an den Zugstäben befestigt werden.

Der Lagerbock 6 der oberen Preßwalze 3 ist parallel zur Preßebene E mit Hilfe von entfernbaren Backen 16 und 17 geführt, die am Maschinengestell 15 befestigt sind. Ähnliche Backen 16' (Fig. 1B) befinden sich am anderen Walzenende. Alle diese Backen sorgen dafür, daß die Hauptachse der oberen Preßwalze 3 stets parallel zur Hauptachse der unteren Preßwalzen 1 bleibt. Die am anderen Walzenende angeordneten Backen 16' haben die zusätzliche Aufgabe, die Position der oberen Preßwalze in Axialrichtung festzulegen, beispielsweise dadurch, daß die Backe 16' eine am Stützelement 6' angeordnete Leiste 6a umgreift. (Fig. 1B).

Damit bei der Langspalt-Preßwalze 3, der schon erwähnte Austausch des flexiblen Walzenmantels 3a (nach dem Entfernen der Zugstäbe 7 und 8 sowie des Zwischenstückes 9 und der Backen 16 und 17) ohne Schwierigkeiten durchgeführt werden kann, ist folgendes vorgesehen: gemäß den Fig. 1 oder 7 erstrecken sich die Arme 6c, 6d des Lagerbockes 6 der Langspalt-Preßwalze 3 nicht über die Umlaufbahn des Walzenmantels 3a hinaus. Somit kann der Preßmantel 3a über den Lagerbock 6 hinweggezogen werden; der letztere braucht also nicht entfernt zu werden. Während des Mantelwechsels wird das in Fig. 1A sichtbare Ende der Langspalt-Preßwalze 3 in bekannter Weise mittels einer Hilfseinrichtung, die an den Zapfen 4 befestigt wird angehoben. - Dadurch daß, wie schon erwähnt, die Arme 6c und 6d innerhalb der Umlaufbahn des Walzenmantels 3a liegen, ist es charakteristisch für die Erfindung, daß der Abstand Z zwischen den Außenseiten der Zugstäbe 7 und 8 kleiner ist als der Durchmesser Y der Langspalt-Preßwalze 3. Ganz allgemein kann gesagt werden, daß der genannte Abstand Z kleiner oder höchstens ganz geringfügig größer ist als der Durchmesser Y der größeren der beiden Preßwalzen 1 oder 3. Dies gilt unabhängig davon, welche der beiden Preßwalzen den größeren Durchmesser aufweist und unabhängig davon ob eine der beiden Preßwalzen als Langspalt-Preßwalze ausgebildet ist oder nicht.

Die in den Figuren 1, 1A und 1B dargestellte Walzenpresse ist - aufgrund des radial beweglichen Preßschuhes 4c - eine sogenannte selbst belastende Walzenpresse (mit anderen Worten: eine Presse mit innerer Anpreßvorrichtung). Die Erfindung ist auch anwendbar, wenn anstelle der Langspalt-Preßwalze 3 eine Preßwalze mit einstellbarer Durchbiegung vorgesehen wird, z.B. eine solche gemäß US 4,691,421; dies ist ebenfalls eine Preßwalze mit innerer Anpreßeinrichtung. Andere Walzenkombinationen sind jedoch ebenfalls denkbar, auch solche mit äußerer Anpreßeinrichtung, z.B. gemäß der US 4,796,452. Dabei können auch zwei normale Preßwalzen (d.h. beide mit drehbaren Walzenzapfen in einer erfindungsgemäßen Walzenpresse verwendet werden.

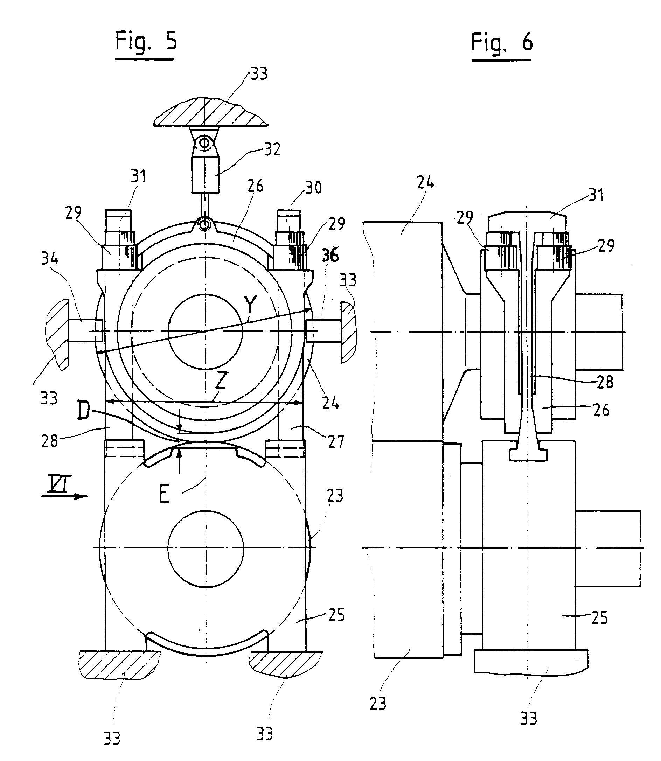

Eine andere erfindungsgemäße Walzenpresse mit äußerer Anpreßeinrichtung ist in den Figuren 5 und 6 dargestellt. Hier ist die erste, untenliegende Preßwalze mit 23 und die zweite, obenliegende Preßwalze mit 24 bezeichnet. Dies können zwei normale Preßwalzen (d.h. beide mit drehbaren Lagerzapfen) sein. Wenigstens eine der beiden Preßwalzen kann aber auch als Durchbiegungseinstellwalze ohne innere Anpreßvorrichtung ausgebildet sein, vorzugsweise gemäß US 4,414,890. Die untere Preßwalze 23 ruht wieder in einem Lagerbock 25, der auf einem Maschinengestell 33 (starr oder verschiebbar) angeordnet ist. Die obere Preßwalze 24 ruht in einem Lagerbock 26, der vertikal beweglich ist, wobei stets ein variabler Abstand D zwischen den Lagerböcken 25 und 26 vorhanden ist. Die Lagerböcke 25 und 26 sind wiederum durch biegeweiche Zugstäbe 27, 28 verbunden, nunmehr jedoch unter Zwischenschaltung von Hydraulikzylindern 29, die drückend wirken. Die letzteren stehen auf dem Lagerbock 26 und drücken gegen vergrößerte Hammerköpfe 30, 31 der (wiederum blattfederartigen) Zugstäbe 27, 28.

Die Kraft der Hydraulikzylinder 29 erzeugt die Preßkraft zwischen den zwei Preßwalzen 23 und 24. Ein weiterer Hydraulikzylinder 32, der ziehend wirkt und der an dem rahmenförmigen Gestell 33 angelenkt ist, hält die obere Preßwalze 24, wenn die Zugstäbe 27, 28 entfernt werden. Danach kann der Hydraulikzylinder 32 die Preßwalze 24 weiter anheben, zur Schaffung eines genügend großen Zwischenraumes zwischen den Preßwalzen, damit ein neues endloses Filzband eingezogen werden kann. Führungsbacken 34, 36 sorgen wiederum für die Zentrierung der oberen Preßwalze 24 in der Preßebene E. Der Hubzylinder 32 bildet eine nachgiebige Verbindung des Lagerbockes 26 mit dem Gestell 33. Gemäß Fig. 5 ist wiederum der Abstand Z zwischen den Außenseiten der beiden Zugstäbe 27 und 28 kleiner als der Durchmesser Y der größeren der beiden Preßwalzen; dies ist hier die Preßwalze 24. Hierdurch kann die Preßwalze 24 jederzeit ausgetauscht werden gegen eine Langspalt-Preßwalze 3 gemäß den Fig. 1, 1A und 1B. Hierbei kann der Lagerbock 25 der unteren Preßwalze 23 unverändert bleiben. Wie man sieht hat dieser Lagerbock 25 genau die gleiche Form wie der Lagerbock 5 der Fig. 1.

Weitere Ausführungsbeispiele der Erfindung ergeben sich, wenn man die dargestellten Varianten auf den Kopf stellt. Die Fig. 7 zeigt ein derartiges Beispiel; dort ist die Walzenpresse gemäß Fig. 1 um 180° gewendet; d.h. die Preßwalze 1 hängt am oberen Teil des Maschinengestells 15, indem (beispielsweise) der Lagerbock 5 mit dem Maschinengestell 15 verschraubt ist. Außerdem hängt die Langspalt-Preßwalze 3 (zumindest an dem in Fig. 7 sichtbaren Ende) mittels der Zugstäbe 7' und 8' am Lagerbock 5 der oberen Preßwalze 1. Die Zugstäbe (z.B. 8') sind, wie schon erwähnt, in Teil-Zugstäbe 8a bis 8c unterteilt.

Zwischen den zwei Lagerböcken 5 und 6 befindet sich wiederum ein entfernbares Zwischenstück 9. Abweichend von Fig. 1 dient dieses Zwischenstück 9 nunmehr hauptsächlich zum gegenseitigen Zentrieren der beiden Lagerböcke 5 und 6, so daß die Backen 16 und 17 der Fig. 1 entfallen können. Man beachte, daß auch im unbelasteten Zustand der Walzenpresse zwischen dem oberen Lagerbock und dem Zwischenstück 9 ein kleiner Abstand p vorhanden ist. Zum Entfernen der Zugstäbe 7' und 8' kann der untere Lagerbock 6 mittels einer auf dem unteren Gestellteil 15 stehenden Hub-Einrichtung 32' angehoben werden. Die letztere ist als drückend wirkender Hydraulikzylinder ausgebildet. Weggelassen sind in Fig. 7 die U-förmigen Keile 10 und 11 der Fig. 1, weil auf sie verzichtet werden kann.

Ein anderes von der Fig. 1 abweichendes Ausführungsbeispiel ist in der Zeichnung nicht dargestellt; es hat jedoch Ähnlichkeit mit der Fig. 7. Danach ist die Langspalt-Preßwalze 3 wiederum unterhalb der normalen Preßwalze 1 angeordnet; ihre Lagerböcke 6 stehen aber nunmehr auf dem unteren Teil des Maschinengestells 15. Der Lagerbock 5 der normalen Preßwalze 1 ist nicht hängend am Gestell 15 befestigt, sondern ruht (im unbelasteten Zustand der Walzenpresse) auf dem Zwischenstück 9. Wiederum sind die Lagerböcke 5 und 6 mittels biegeweicher Zugstäbe 7 und 8 aneinandergekoppelt, so daß erneut eine Beweglichkeit des oberen Lagerbockes 6 relativ zum unteren Lagerbock 5 gewährleistet ist.

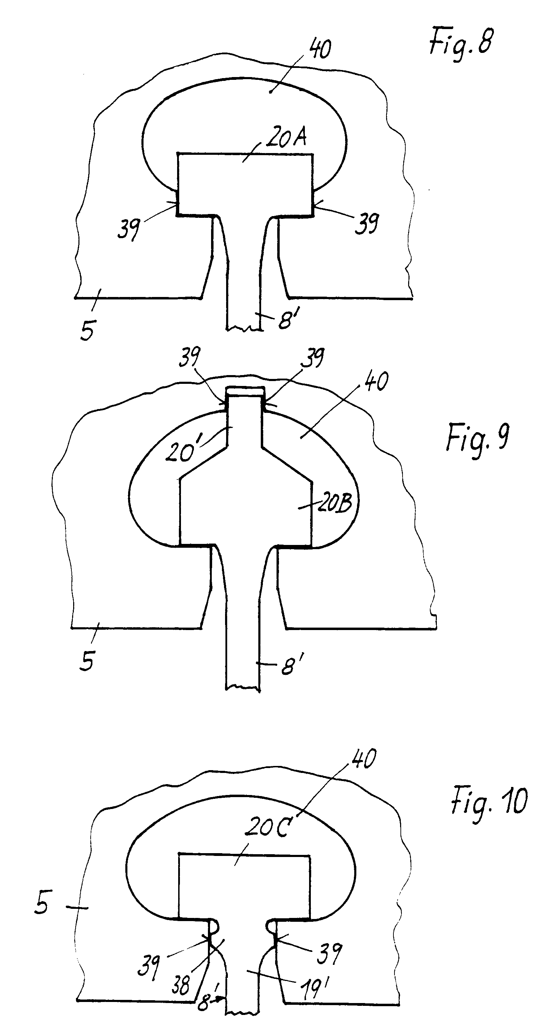

Aus den Figuren 8 bis 10 ist ersichtlich, daß im Lagerbock 5 (z.B. der Fig. 7) die T-Nut (40) eine spezielle gerundete Form aufweisen kann, um die vom Zugstab 8' eingeleitete hohe Zugkraft möglichst sicher in den übrigen Teil des Lagerbocks zu übertragen. Genauer gesagt: Der den Kopf 20A bzw. 20B bzw. 20C des Zugstabes 8' umhüllende Teil der T-Nut 40 weist einen überwiegend runden Querschnitt auf. - Damit der Kopf des Zugstabes 8' (trotz der in Fig. 4 dargestellten Verformung des Zugstabes) mit möglichst hoher Sicherheit in der T-Nut fixiert ist, sind am Zugstab zwei Stützflächen 39 vorgesehen, die im wesentlichen parallel zur Zugstab-Längsachse und im wesentlichen senkrecht zur Preßebene E (Fig. 7) liegen. Diese Stützflächen 39 stehen im Kontakt mit Gegen-Stützflächen, die am Lagerbock 5 vorgesehen sind. Gemäß Fig. 8 sind die Stützflächen 39 unmittelbar am Kopf 20A vorgesehen; d.h. die Stützflächen 39 werden durch die beidseitigen Stirnflächen des Kopfes 20A gebildet. Gemäß Fig. 9 sind die Stützflächen 39 an einer Verlängerung 20' des Kopfes 20B vorgesehen. Gemäß Fig. 10 sind die Stützflächen 39 an einer Verdickung 38 des Zwischenabschnittes 19' vorgesehen. Die Verdickung 38 befindet sich in nur geringer Entfernung vom Kopf 20C. Die Übergänge von der Verdickung 38 zum Kopf 20C sind als Rillen mit halbrundem Querschnitt ausgebildet.

## Patentansprüche

1. Walzenpresse mit einer ersten Preßwalze (1) und mit einer zweiten Preßwalze (3), deren Hauptachsen in einer Preßebene (E) liegen und die miteinander einen Preßspalt bilden, ferner mit den folgenden Merkmalen:
a) jede der beiden Preßwalzen (1, 3) hat einen drehbaren Walzenmantel (1a; 3a) und entweder - z.B. am drehbaren Walzenmantel befestigte - drehbare Lagerzapfen (2) oder einen stationären und sich durch den Walzenmantel (3a) erstreckenden Träger (4a) mit stationären Lagerzapfen (4);
b) die erste Preßwalze (1) ist an mindestens einem ihrer beiden Enden in einem Lagerbock (5) abgestützt, der seinerseits an einem Gestell (15) abgestützt ist;
c) die zweite Preßwalze (3) ist an mindestens einem ihrer beiden Enden ebenfalls in einem Lagerbock (6) abgestützt, der an den Lagerbock (5) der ersten Preßwalze gekoppelt ist mittels zweier lösbarer Zugstäbe (7, 8), die sich zu beiden Seiten der Preßebene (E) im wesentlichen parallel zu dieser und senkrecht zu den Hauptachsen der Preßwalzen (1, 2) erstrecken;
gekennzeichnet durch die folgenden Merkmale:
d) die genannten lösbaren Zugstäbe (7, 8) sind im unbelasteten Zustand der Walzenpresse spannungsarm;
e) die Zugstäbe (7, 8) sind im wesentlichen in der Richtung der Hauptachsen derart beweglich, daß - im belasteten Zustand der Walzenpresse - der Lagerbock (6) der zweiten Preßwalze (3) in der Preßebene (E) relativ zum Lagerbock (5) der ersten Preßwalze (1) beweglich ist;
f) in Achsrichtung gesehen ist der Abstand (Z) zwischen den Außenseiten der beiden Zugstäbe (7, 8) im wesentlichen gleich groß wie oder kleiner als der Durchmesser (Y) der größeren der beiden Preßwalzen (1 bzw. 3).

2. Walzenpresse nach Anspruch 1, worin eine der beiden Preßwalzen (z.B. 3) als Langspalt-Preßwalze ausgebildet ist, die einen schlauchförmigen flexiblen Walzenmantel (3a) aufweist, dadurch gekennzeichnet, daß der Abstand (Z) zwischen den Außenseiten der beiden Zugstäbe (7, 8) kleiner ist als der Durchmesser (Y) der Langspalt-Preßwalze, und daß der Lagerbock (6) der Langspalt-Preßwalze (3) für das Ankoppeln der Zugstäbe (7, 8) Arme (6c, 6d) aufweist, die - in Achsrichtung gesehen - im wesentlichen innerhalb der Umlaufbahn der Walzenmantels (3a) angeordnet sind.

3. Walzenpresse nach Anspruch 1 oder 2, dadurch gekennzeichnet, daß der einzelne Zugstab (7, 8) in der Richtung der Preßwalzen-Hauptachsen biegeweich ist.

4. Walzenpresse nach Anspruch 3, dadurch gekennzeichnet, daß jeder der biegeweichen Zugstäbe (7, 8) an jedem seiner beiden Enden einen Kopf, vorzugsweise einen Hammerkopf (20), aufweist.

5. Walzenpresse nach einem der Ansprüche 1 bis 4, dadurch gekennzeichnet, daß jeder der Zugstäbe (7, 8), in Achsrichtung gesehen, von der Seite her in die Lagerböcke (5 und 6) einsetzbar ist.

6. Walzenpresse nach einem der Ansprüche 3 bis 5, dadurch gekennzeichnet, daß der einzelne Zugstab (7, 8) nach Art einer Blattfeder ausgebildet ist, deren "Blattebene" im wesentlichen senkrecht zur Preßebene (E) liegt, so daß die Biegsamkeit des Zugstabes in einer zur Preßebene (E) parallelen Ebene um ein Vielfaches höher ist als senkrecht zur Preßebene.

7. Walzenpresse nach einem der Ansprüche 4 bis 6, dadurch gekennzeichnet, daß der einzelne Zugstab (8) in der Mitte seiner Länge eine Querbohrung (13) aufweist, die sich in derjenigen Richtung erstreckt, in welcher der Zugstab von der Seite her in die Lagerböcke (5 und 6) eingesetzt wird, und daß sich ein am Maschinengestell (15) abgestützter Bolzen (14) in die Querbohrung (13) erstreckt.

8. Walzenpresse nach einem der Ansprüche 2 bis 7, gekennzeichnet durch die folgenden Merkmale:
a) die Länge der Zugstäbe (7, 8) beträgt mindestens einen halben Meter, vorzugsweise 0,7 bis 1,5 Meter;
b) die Zugstäbe (7, 8) sind mit ihrem einen Ende nahe der zur Preßebene (E) senkrechten Mittelebene (L) der Langspalt-Preßwalze (3) an den Lagerbock (6) der Langspalt-Preßwalze (3) angekoppelt;
c) die Zugstäbe (7, 8) sind mit ihrem anderen Ende nahe der zur Preßebene (E) senkrechten und durch den Preßspalt verlaufenden Preßspaltebene (M) an den Lagerbock (5) der anderen Preßwalze (1) angekoppelt.

9. Walzenpresse nach Anspruch 8, dadurch gekennzeichnet, daß für jeden der biegeweichen Zugstäbe (7, 8) im Lagerbock (6) der Langspalt-Preßwalze (3) ein einfacher Schlitz und im Lagerbock (5) der anderen Preßwalze eine T-Nut vorgesehen sind.

10. Walzenpresse nach einem der Ansprüche 4 bis 6, dadurch gekennzeichnet, daß der einzelne Zugstab (8') über seine Breite (b) in mehrere Teil-Zugstäbe (8a, 8b, 8c) unterteilt ist, die miteinander eine Zugstab-Gruppe bilden.

11. Walzenpresse nach einem der Ansprüche 1 bis 10, dadurch gekennzeichnet, daß die zweite Preßwalze (3) oberhalb der ersten Preßwalze (1) angeordnet ist, wobei - im unbelasteten Zustand der Walzenpresse - der Lagerbock (6) der zweiten Preßwalze (3) auf dem Lagerbock (5) der ersten Preßwalze (1) ruht, und wobei sich im belasteten Zustand der Walzenpresse zwischen dem Stützelement (6) und dem Lagerbock (5) ein Spiel (p) einstellt.

12. Walzenpresse nach einem der Ansprüche 1 bis 10, dadurch gekennzeichnet, daß die erste Preßwalze (1) oberhalb der zweiten Preßwalze (3) angeordnet ist und an einem Gestellteil (15) hängend abgestützt ist, und daß die zweite Preßwalze mittels der Zugstäbe (7', 8') an den Lagerböcken (5) der ersten Preßwalze hängt.

13. Walzenpresse nach einem der Ansprüche 1 bis 12, dadurch gekennzeichnet, daß in an sich bekannter Weise zwischen den Lagerböcken (5 und 6) ein entfernbares Zwischenstück (9) angeordnet ist.

14. Walzenpresse nach einem der Ansprüche 11 bis 13, dadurch gekennzeichnet, daß die zweite Preßwalze (3) mittels einer Hubeinrichtung (12 bzw. 32, 32') relativ zur ersten Preßwalze (1) anhebbar ist.

15. Walzenpresse nach einem der Ansprüche 1 bis 10 gekennzeichnet durch die folgenden Merkmale:
a) zwischen dem Lagerbock (26) der zweiten Preßwalze (24) und dem Lagerbock (25) der ersten Preßwalze (23) ist dauernd ein Abstand (D) vorhanden;
b) der Lagerbock (26) der zweiten Preßwalze (24) ist mittels einer Hubeinrichtung (32) mit dem Gestell (33) verbunden.

16. Walzenpresse nach einem der Ansprüche 4 bis 15, dadurch gekennzeichnet, daß an jedem der Zugstäbe (7, 8) zwischen einem der Köpfe (20) und dem zugeordneten Lagerbock (5 oder 6) ein U-förmiger Keil (10, 11) eingesetzt ist.

17. Walzenpresse, die an ihren beiden Enden mit Zugstäben (7, 7') ausgerüstet ist, nach einem der Ansprüche 1 bis 16, dadurch gekennzeichnet, daß an der zweiten Preßwalze (3) der eine Lagerbock (6') in vertikalen Gleitbahnen in axialer und seitlicher Richtung geführt ist, während der andere Lagerbock (6) nur seitlich, d.h. parallel zur Preßebene (E) geführt ist, z.B. mit Hilfe von stationären Führungsbacken (16, 17).

18. Walzenpresse, die an ihren beiden Enden mit Zugstäben ausgerüstet ist, nach einem der Ansprüche 1 bis 17, dadurch gekennzeichnet, daß die Zugstäbe (27, 28) unter Zwischenschaltung von hydraulischen Hubzylindern (29) an den Lagerböcken (25 und 26) angreifen.

19. Walzenpresse nach Anspruch 9, worin einer der Lagerböcke (z.B. 5) eine T-Nut (40) aufweist, in die ein Zugstab (8') eingreift, dadurch gekennzeichnet, daß der den Kopf (20A, 20B, 20C) des Zugstabes umhüllende Teil der T-Nut (40) einen zumindest überwiegend runden Querschnitt aufweist.

20. Zugstab, insbesondere zur Preßkraft-Übertragung in einer Preßvorrichtung, die zur Behandlung (z.B. Entwässerung) einer Warenbahn dient, die quer zu einer Preßebene (E) durch die Preßvorrichtung läuft, gekennzeichnet durch die folgenden Merkmale:
a) der Zugstab (7; 8; 8') hat die Form eines I mit einem blattfederartigen und in einer "Blattebene" liegenden Mittelteil (18) sowie mit zwei Köpfen (20),
b) die Breite (b) des Zugstabes ist im wesentlichen über seine ganze Länge gleich groß, so daß die Biegsamkeit des Zugstabes quer zur "Blattebene" um ein Vielfaches größer ist als in der Blattebene.

21. Zugstab nach Anspruch 20, dadurch gekennzeichnet, daß der blattfederartige Mittelteil (18) mit jedem Kopf (20) über einen Zwischenabschnitt (19) verbunden ist, dessen Dicke, ausgehend von der Dicke (s) des Mittelteils (18), in Richtung zum Kopf zunimmt.

22. Zugstab nach Anspruch 21, dadurch gekennzeichnet, daß der Zwischenabschnitt (19) zumindest überwiegend keilförmig ist.

23. Zugstab nach Anspruch 20 oder 21, dadurch gekennzeichnet, daß die Länge des Mittelteils (18) etwa 1/3 bis etwa 9/10 der Gesamtlänge des Zugstabes (8) beträgt.

24. Zugstab nach Anspruch 20, dadurch gekennzeichnet, daß im Bereich des Kopfes (20A, 20B, 20C) zwei Stützflächen (39) angeordnet sind, die im wesentlichen parallel zur Zugstab-Längsachse und im wesentlichen senkrecht zur Preßebene (E) liegen und die für einen Kontakt mit Gegen-Stützflächen - z.B. eines Lagerbockes 5 - vorgesehen sind.

25. Zugstab nach Anspruch 24, dadurch gekennzeichnet, daß die Stützflächen (39) unmittelbar am Kopf (20A) vorgesehen sind.

26. Zugstab nach Anspruch 24, dadurch gekennzeichnet, daß die Stützflächen (39) an einer Verlängerung (20') des Kopfes (20B) vorgesehen sind.

27. Zugstab nach Anspruch 24, dadurch gekennzeichnet, daß die Stützflächen (39) an einer Verdickung (38) des Zwischenabschnittes (19') vorgesehen sind.

28. Zugstab nach einem der Ansprüche 20 bis 27, dadurch gekennzeichnet, daß er für die folgende Anordnung in der Preßvorrichtung vorgesehen ist:
a) der Zugstab (7; 8; 8') erstreckt sich im wesentlichen parallel zur Preßebene (E) und quer zur Bahnlaufrichtung;
b) die "Blattebene" liegt im wesentlichen senkrecht zur Preßebene (E).

## Claims

1. Roller press having a first press roll (1) and a second press roll (3) the main axes of which lie in the pressing plane (E) and which together form a press nip, also having the following features:
a) both of the press rolls (1, 3) each have a rotatable roller shell (1a; 3a) and either rotatable pivot pins (2) - e.g. attached to the rotatable roller shell - or a fixed carrier (4a) extending through the roller shell (3a) with fixed pivot pins (4);
b) the first press roll (1) is supported at least at one of its two ends on a bearing support (5) which in turn is supported on a frame (15);
c) the second press roll (3) is also supported at least at one of its two ends on a bearing support (6) which is connected to the bearing support (5) of the first press roll by means of two detachable tensile members (7, 8) which extend on both sides of the pressing plane (E) essentially parallel thereto and perpendicular to the main axes of the press rolls (1, 2);
characterised by the following features:
d) the said detachable tensile bars (7, 8) are tension free in an unstressed state of the roller press;
e) the tensile bars (7, 8) are essentially movable in the direction of the main axes so that - in a stressed state of the roller press - the bearing support (6) of the second press roll (3) in the pressing plane (E) moves relative to the bearing support (5) of the first press roll (1);
f) viewed in an axial direction the distance (Z) between the outer sides of both tensile bars (7, 8) is essentially the same as or smaller than the diameter (Y) of the larger of the two press rolls (1 or 3).

2. Roller press according to claim 1, wherein one of the two press rolls (e.g. 3) has the form of a long nip press roll which has a tubular, flexible roller shell (3a), characterised in that the distance (Z) between the outer sides of both tensile bars (7, 8) is smaller than the diameter (Y) of the long nip press roll and that the bearing support (6) of the long nip press roll (3) has arms (6c, 6d) for coupling the tensile bars (7, 8) arranged - as viewed axially - inside the ring of the roller shell (3a).

3. Roller press according to claim 1 or 2, characterised in that the tensile bar (7,8) is flexible in the direction of the press roll main axes.

4. Roller press according to claim 3, characterised in that each of the flexible tensile bars (7, 8) has a head on both of its ends, preferably a hammer head (20).

5. Roller press according to one of claims 1 to 4, characterised in that each of the tensile bars (7, 8), as viewed axially is inserted into the bearing supports (5 and 6) from the side.

6. Roller press according to one of claims 3 to 5, characterised in that the tensile bar (7, 8) is designed as a type of leaf spring, the "leaf plane" of which is essentially perpendicular to the pressing plane (E), so that the flexibility of the tensile bar in a parallel plane to the pressing plane (E) is many times greater than when perpendicular to the pressing plane.

7. Roller press according to one of claims 4 to 6, characterised in that the tensile bar (8) has a cross bore (13) halfway along its length which extends in the direction in which the tensile bar is inserted into the bearing supports (5 and 6) from the side, and that a bolt (14) supported on the machine frame (15) extends into the cross bore (13).

8. Roller press according to one of claims 2 to 7, characterised by the following features:
a) the length of the tensile bars (7, 8) is at least half a metre, preferably 0.7 to 1.5 metres;
b) the tensile bars (7, 8) are linked to the bearing support (6) of the long nip press roll (3) at their end near the central plane (L) of the long nip press roll (3) perpendicular to the pressing plane (E);
c) the tensile bars (7, 8) are linked to the bearing support (5) of the other press roll (1) at their other end near the press nip plane (M) perpendicular to the pressing plane (E) and passing through the press nip.

9. Roller press according to claim 8, characterised in that a simple slit is provided in the bearing support (6) of the long nip press roll (3) and a T-slot is provided in the bearing support (5) of other press roll for each of the flexible tensile bars (7, 8).

10. Roller press according to one of claims 4 to 6, characterised in that the tensile bar (8') is subdivided along its width (b) into several part tensile bars (8a, 8b, 8c) which together form a tensile bar group.

11. Roller press according to one of claims 1 to 10, characterised in that the second press roll (3) is arranged above the first press roll (1), whereby - in an unstressed state of the roller press - the bearing support (6) of the second press roll (3) rests on the bearing support (5) on the bearing support of the first press roll (1) and where a play (p) exists between the supporting member (6) and the bearing support (5) in the stressed state of the roller press (5).

12. Roller press according to one of claims 1 to 10, characterised in that the first press roll (1) is arranged above the second press roll (3) and is suspended from a frame member (15) and that the second press roll is suspended from the bearing supports (5) of the first press roll by means of the tensile bars (7', 8').

13. Roller press according to one of claims 1 to 12, characterised in that a removable connecting piece (9) is arranged in a known way between the bearing supports (5 and 6).

14. Roller press according to one of claims 11 to 13, characterised in that the second press roll (3) can be lifted relative to the first press roll (1) by means of a lifting device (12 or 32, 32').

15. Roller press according to one of claims 1 to 10 characterised by the following features:
a) there is always a distance (D) between the bearing support (26) of the second press roll (24) and the bearing support (25) of the first press roll (23);
b) the bearing support (26) of the second press roll (24) is connected to the frame (33) by means of a lifting device (32).

16. Roller press according to one of claims 4 to 15, characterised in that a U-shaped wedge (10, 11) is fitted in each tensile bar (7, 8) between one of the heads (20) and the respective bearing support (5 or 6).

17. Roller press equipped at both ends with tensile bars (7, 7'), according to one of claims 1 to 16, characterised in that one bearing support (6') is guided past the second press roll (3) on vertical tracks in an axial and lateral direction, whereas the other bearing support (6) is guided laterally only, i.e. parallel to the pressing plane (E), e.g. with the assistance of stationary guiding blocks (16, 17).

18. Roller press equipped at both ends with tensile bars according to one of claims 1 to 17, characterised in that the tensile bars (27, 28) hold the bearing supports (25 and 26) by interconnection of hydraulic lift cylinders (29).

19. Roller press according to claim 9, wherein one of the bearing supports (e.g. 5) has a T-slot (40) which holds a tensile bar (8'), characterised in that the part of the T-slot (40) enclosing the head (20A, 20B, 20C) of the tensile bar has a predominantly round cross section.

20. Tensile bar, in particular for the transmission of pressing force in a pressing device, for treating a web (e.g. dewatering) which runs at right angles to the pressing plane (E) through the pressing device, characterised by the following features:
a) the tensile bar (7; 8; 8') has the shape of an I with a leaf spring-like central part (18) lying in a "leaf plane" and two heads (20),
b) the width (b) of the tensile bar is essentially the same along its whole length so that the flexibility of the tensile bar is many times greater at right angles to the "leaf plane" than in the leaf plane.

21. Tensile bar according to claim 20, characterised in that the leaf spring-like central part (18) is connected to each head (20) by a connecting piece (19) the thickness of which increases towards the head starting with the thickness (s) of the central part (18).

22. Tensile bar according to claim 21, characterised in that the connecting piece (19) is predominantly wedge-shaped.

23. Tensile bar according to claim 20 or 21, characterised in that the length of the central part (18) is approximately 1/3 to 9/10 of the total length of the tensile bar (8).

24. Tensile bar according to claim 20, characterised in that two support surfaces (39) are arranged in the region of the head (20A, 20B, 20C) which are essentially parallel to the tensile bar longitudinal axis and essentially perpendicular to the pressing plane (E) and which are designed to contact the counter supporting surfaces - e.g. of a bearing support (5).

25. The tensile bar according to claim 24, characterised in that the supporting surfaces (39) are provided right at the head (20A).

26. Tensile bar according to claim 24 characterised in that the supporting surfaces (39) are provided on an extension (20') of the head (20B).

27. Tensile bar according to claim 24, characterised in that the supporting surfaces (39) are provided at a thick point (38) of the connecting piece (19').

28. Tensile bar according to one of claims 20 to 27, characterised in that it has the following arrangement in the pressing device:
a) the tensile bar (7; 8; 8') extends essentially parallel to the pressing plane (E) and at right angles to the direction of the belt;
b) the "leaf plane" lies essentially perpendicular to the pressing plane (E).

## Revendications

1. Presse à rouleaux avec un premier rouleau de pressage (1) et un deuxième rouleau de pressage (3), dont les axes principaux se trouvent dans un plan de presse (E) et qui forment l'un avec l'autre une fente de pressage, avec en outre les particularités suivantes :
a) chacun des deux rouleaux de pressage (1, 3) a une enveloppe de rouleau qui peut tourner (1a ; 3a) et soit un tourillon qui peut tourner (2), par exemple fixé sur l'enveloppe du rouleau qui peut tourner, soit un support (4a) fixe s'étendant à travers l'enveloppe du rouleau (3a), avec un tourillon fixe (4),
b) le premier rouleau de pressage (1) est abrité sur au moins l'une de ses deux extrémités dans un palier (5) qui de son côté est abrité dans un bâti (15),
c) le deuxième rouleau de pressage (3) est également abrité sur au moins l'une de ses deux extrémités dans un palier (6) accouplé au palier (5) du premier rouleau de pressage au moyen de deux tirants détachables (7, 8) qui s'étendent des deux côtés du plan de la presse (E), de façon sensiblement parallèle à celui-ci et perpendiculairement aux axes principaux des rouleaux de pressage (1, 2),
presse à rouleaux caractérisée par les particularités suivantes :
d) les tirants détachables mentionnés (7, 8) sont faiblement tendus quand la presse à rouleaux est dans l'état non chargé,
e) les tirants (7, 8) sont sensiblement mobiles dans la direction des axes principaux de telle façon que, quand la presse à rouleaux est dans l'état chargé, le palier (6) du deuxième rouleau de pressage (3) soit mobile dans le plan de la presse (E) par rapport au palier (5) du premier rouleau de pressage (1),
f) vu dans le sens de l'axe, l'intervalle (Z) entre les côtés extérieurs des deux tirants (7, 8) est essentiellement aussi grand ou plus petit que le diamètre (Y) du plus grand des deux rouleaux de pressage (1 ou 3).

2. Presse à rouleaux selon la revendication 1, dans laquelle l'un des deux rouleaux de pressage (par exemple 3) est constitué sous la forme d'un rouleau de pressage à fente longitudinale qui présente une enveloppe de rouleau (3a) flexible en forme de tuyau, presse à rouleaux caractérisée en ce que la distance entre les côtés extérieurs des deux tirants (7, 8) est plus petite que le diamètre (Y) du rouleau de pressage à fente longitudinale, et en ce que le palier (6) du rouleau de pressage (3) à fente longitudinale présente, pour l'accouplement des tirants (7, 8), des bras (6c, 6d) qui, vus dans la direction de l'axe, sont sensiblement disposés à l'intérieur de la piste périphérique de l'enveloppe du rouleau (3a).

3. Presse à rouleaux selon la revendication 1 ou 2, caractérisée en ce que le tirant (7, 8) pris isolément est flexible dans la direction de l'axe principal du rouleau de pressage.

4. Presse à rouleaux selon la revendication 3, caractérisée en ce que chacun des tirants flexibles (7, 8) présente à chacune de ses deux extrémités une tête, de préférence une tête rectangulaire à angles abattus (20).

5. Presse à rouleaux selon l'une des revendications 1 à 4, caractérisée en ce que chacun des tirants (7, 8), vu en direction de l'axe, peut être inséré par le côté dans les paliers (5 et 6).

6. Presse à rouleaux selon l'une des revendications 3 à 5, caractérisée en ce que le tirant (7, 8) pris isolément est constitué à la manière d'une lame de ressort dont le 〈〈 plan de lame 〉〉 se trouve sensiblement perpendiculaire au plan de pressage (E), de telle sorte que la flexibilité du tirant soit supérieure d'un multiple, dans un plan parallèle au plan de pressage (E), par rapport à une direction perpendiculaire au plan de pressage.

7. Presse à rouleaux selon l'une des revendications 4 à 6, caractérisée en ce que le tirant (8) pris individuellement présente, dans le milieu de sa longueur un alésage transversal (13) qui s'étend dans la direction dans laquelle le tirant est inséré par le côté dans les paliers (5 et 6), et en ce qu'un axe (14) s'appuyant sur le bâti de la machine (15) s'étend dans l'alésage transversal (13).

8. Presse à rouleaux selon l'une des revendications 2 à 7, caractérisée par les particularités suivantes :
a) la longueur des tirants (7, 8) atteint au moins 0,50 m, et de préférence 0,7 à 1,5 mètre,
b) les tirants (7, 8) sont accouplés par l'une de leurs extrémités au voisinage du plan médian (L), perpendiculairement au plan de pressage (E), du rouleau de pressage à fente longitudinale (3) au palier (6) du rouleau de pressage à fente longitudinale (3),
c) les tirants (7, 8) sont accouplés par leur autre extrémité au voisinage du plan de la fente de pressage (M) perpendiculaire au plan de pressage (E) et s'étendent à travers la fente de pressage, au palier (5) de l'autre rouleau de pressage (1).

9. Presse à rouleaux selon la revendication 8, caractérisée en ce que l'on prévoit une simple fente pour chacun des tirants flexibles (7, 8) dans le palier (6) du rouleau de pressage à fente longitudinale (3) et une rainure en T dans le palier (5) de l'autre rouleau de pressage.

10. Presse à rouleaux selon l'une des revendications 4 à 6, caractérisée en ce que le tirant (8') pris individuellement est subdivisé sur son étendue (b) en plusieurs tirants partiels (8a, 8b, 8c) qui forment les uns avec les autres un groupe de tirants.

11. Presse à rouleaux selon l'une des revendications 1 à 10, caractérisée en ce que le deuxième rouleau de pressage (3) est disposé au-dessus du premier rouleau de pressage (1) et, quand la presse à rouleaux est dans l'état non chargé, le palier (6) du deuxième rouleau de pressage (3) repose sur le palier (5) du premier rouleau de pressage (1), tandis qu'il s'établit un jeu (p), quand la presse à rouleaux est à l'état chargé, entre l'élément d'appui (6) et le palier (5).

12. Presse à rouleaux selon l'une des revendications 1 à 10, caractérisée en ce que le premier rouleau de pressage (1) est disposé au-dessus du deuxième rouleau de pressage (3) et est accroché à une partie du bâti (15), et en ce que le second rouleau de pressage est accroché au moyen des tirants (7', 8') aux paliers (5) du premier rouleau de pressage.

13. Presse à rouleaux selon l'une des revendications 1 à 12, caractérisée en ce que l'on dispose une pièce intermédiaire (9) amovible, d'une manière connue en soi, entre les paliers (5 et 6).

14. Presse à rouleaux selon l'une des revendications 11 à 13, caractérisée en ce que le deuxième rouleau de pressage (3) peut être soulevé au moyen d'un engin de levage (12 ou 32, 32') par rapport au premier rouleau de pressage (1).

15. Presse à rouleaux selon l'une des revendications 1 à 10, caractérisée par les particularités suivantes :
a) entre le palier (26) du second rouleau de pressage (24) et le palier (25) du premier rouleau de pressage (23) il y a en permanence un écartement (D),
b) le palier (26) du deuxième rouleau de pressage (24) est relié , au moyen d'un engin de levage (32), au bâti (33).

16. Presse à rouleaux selon l'une des revendications 4 à 15, caractérisée en ce que sur chacun des tirants (7, 8) on insère, entre l'une des têtes (20) et le palier correspondant (5 ou 6), un coin en forme de U (10, 11.

17. Presse à rouleaux équipée à ses deux extrémités de tirants (7, 7'), selon l'une des revendications 1 à 16, presse à rouleaux caractérisée en ce que, sur le second rouleau de pressage (3), l'un des paliers (6') est guidé dans le sens axial et latéral dans des glissières verticales, tandis que l'autre palier (6) n'est guidé que latéralement, c'est-à-dire en parallèle au plan de pressage (E), par exemple à l'aide de mâchoires de guidage fixes (16, 17).

18. Presse à rouleaux équipée à ses deux extrémités de tirants, selon l'une des revendications 1 à 17, presse à rouleaux caractérisée en ce que les tirants (27, 28) viennent en prise sur les paliers (25 et 26) avec interposition de vérins hydrauliques (29).

19. Presse à rouleaux selon la revendication 9, dans laquelle l'un des paliers (par exemple le palier 5) présente une rainure en T (49) dans laquelle vient en prise un tirant (8'), presse à rouleaux caractérisée en ce que la partie de la rainure en T (40) qui entoure la tête (20A, 20B, 20C) du tirant, présente une section transversale ronde au moins de façon prépondérante.

20. Tirant, en particulier pour la transmission de forces de pressage dans un dispositif de pressage qui sert au traitement d'une bande de produit (par exemple à son essorage), produit qui passe perpendiculairement à un plan de pressage (E) à travers le dispositif de pressage, tirant caractérisé par les particularités suivantes :
a) le tirant (7, 8, 8') a la forme d'un I avec une partie médiane (18) du type lame de ressort se trouvant dans un 〈〈 plan de lame 〉〉 ainsi qu'avec deux têtes (20),
b) la largeur (b) du tirant est sensiblement la même sur toute la longueur, de telle sorte que la flexibilité du tirant perpendiculairement au 〈〈 plan de lame 〉〉 est supérieure d'un multiple à celle dans le plan de lame.

21. Tirant selon la revendication 20, caractérisé en ce que la partie médiane du type lame de ressort (18) est reliée à chaque tête (20) par l'intermédiaire d'une section intercalaire (19) dont l'épaisseur, en partant de l'épaisseur (s) de la partie médiane (18), augmente en direction de la tête.

22. Tirant selon la revendication 21, caractérisé en ce que la section intercalaire (19) à la forme d'un coin, du moins de façon prépondérante.

23. Tirant selon la revendication 20 ou 21, caractérisé en ce que la longueur de la partie médiane (18) atteint environ 1/3 jusqu'aux 9/10^{èmes} de la longueur totale du tirant (8).

24. Tirant selon la revendication 20, caractérisé en ce que dans la zone de la tête (20A, 20B, 20C) sont disposées deux surfaces d'appui (39) qui se trouvent sensiblement parallèles à l'axe longitudinal du tirant et sensiblement perpendiculaires au plan de pressage (E), et qui sont prévues pour venir en contact avec des surfaces d'appui opposées, par exemple d'un palier 5.

25. Tirant selon la revendications 24, caractérisé en ce que les surfaces d'appui (39) sont directement prévues sur la tête (20A).

26. Tirant selon la revendication 24, caractérisé en ce que les surfaces d'appui (29) sont prévues sur un prolongement (20') de la tête (20B).

27. Tirant selon la revendication 24, caractérisé en ce que les surfaces d'appui (39) sont prévues sur un renforcement (38) de la section intercalaire (19').

28. Tirant selon l'une des revendications 20 à 27, caractérisé en ce que l'on prévoit, pour la disposition suivante dans le dispositif de pressage, que :
a) le tirant (7, 8, 8') s'étende de façon sensiblement parallèle au plan de pressage (E) et perpendiculairement au sens du déroulement de la bande,
b) le 〈〈 plan de lame 〉〉 se trouve sensiblement perpendiculaire au plan de pressage (E).
